# EUROPEAN PATENT SPECIFICATION

(11) **EP 0 459 638 B1**
(45) Date of publication and mention of the grant of the patent: **27.03.1996**
(21) Application number: 91304131.5
(22) Date of filing: 08.05.1991
(51) Int. Cl.: A01D 34/74

(54) **Lawn mower**
Rasenmäher
Tondeuse à gazon

(30) Priority: 01.06.1990 US 531991
(43) Date of publication of application: 04.12.1991
(60) Divisional application: 95201118.7
(73) Proprietor: Black & Decker Inc., Newark Delaware 19711 (US)
(72) Inventor: Hess, Kristoffer A., Ontario, K6V 5T2 (CA); Hare, Ronald G., Ontario, K6V 5T2 (CA); Jackson, Ronald A., Brockville, Ontario, K6V 1X3 (CA); Bond, Courtney F., Ontario, K6V 5T5 (CA)
(74) Representative: Stagg, Diana Christine

(56) References cited:
- CH-A- 328 972
- US-A- 3 161 006
- US-A- 3 269 100
- US-A- 4 321 785
- US-A- 4 899 524
- US-A- 4 905 463

## Description

The present invention relates to a system for adjusting the height of a wheeled vegetation-cutting machine above the ground, particularly a lawn mower, whether petrol or electric powered.

Lawn mower height-adjust systems are basically of two types: those in which individual adjustments are made to each wheel height, and those in which the positions of two or more wheels are adjusted simultaneously. Both types of height-adjust systems are found predominantly in use with metal lawn mower decks. Very few relate to mounting a height-adjust system onto a plastic deck and rely upon extra reinforcing to minimise the stresses applied to the deck through the wheel axles. Also, in both metal and plastic applications, many height-adjust systems require a large quantity of parts, are difficult to adjust without tools, and use non-standard components. It is usually necessary for the operator to use both hands to adjust the positions of the wheels relative to the deck. It is also a problem inherent in systems which adjust one wheel at a time to ensure that all four wheels are ultimately in the same position relative to the deck.

Systems which adjust two or more wheels at once solve this problem, but with the disadvantage of requiring the operator to move the considerable weight of the deck, engine or motor and bag. Various counterbalance systems have been developed to permit the operator to adjust the height mechanism without strain, predominantly for a metal lawn mower deck. Inasmuch as metal is a stronger medium than plastic, a minimum of attention was devoted to developing means for handling the stresses on the deck generated by forces directed through the four separate lever/bell crank arrangements. Additionally, conventional systems require several parts, are intricate, are not easily assembled and are expensive. Also the height-adjust lever which is used to move all four wheels simultaneously is typically mounted in an exposed position, such as on the lawn mower push handle itself or on the upper surface of the deck. Conventionally, if it were desired to manufacture lawn mowers incorporating both types of height-adjust system, it would be necessary to manufacture and maintain in stock two or more different lawn mower configurations. Accordingly, there exists a need to provide a single platform configuration upon which all of the different types of height-adjust systems can readily be mounted both simply and inexpensively. The need has been especially great to provide a single configuration of a unitary plastic lawn mower deck which is adapted to support such systems, and there has existed a corresponding need for height-adjust systems that would be compatible with such a deck.

United States Patent No 4 899 524 describes a lawnmower including a housing; wheels and wheel axles for supporting said housing from a ground surface; said housing having a series of vertically spaced apart bores therein associated with each said wheel for selectively engaging a wheel axle therein for varying the clearance of the housing from the ground surface, each said axle having adjacent the proximal end thereof a peripheral groove, guide means on said housing associated with each series of bores, said guide means comprising a slotted passageway, each said bore of an associated set of bores being completely intersected by said passageway, and blade means having a plurality of transversely aligned corrugations therealong slidable along each said slotted passageway, said blade means having an elongated opening to engage said peripheral groove therein to secure a said axle in a selected bore, with corrugated portions of said blade means in interfering relationship with said guide means along the length thereof.

It is an object of the present invention to provide a lawn mower height-adjust system which permits an operator quickly and easily to adjust the height of a ground-supported vegetation cutter, of the type in which the height of each wheel relative to the deck is adjusted individually. A feature by which this is achieved in preferred embodiments of the present invention is by forming four annular axially-extending bosses on the deck side walls such that each boss defines a central bore, an axle slot, and a plurality of recesses formed in a predetermined array about the boss bore. This makes it possible for both types of height-adjust systems to be mounted on the same deck configuration, the individual height-adjust type making use of the predetermined array of recesses to lock an axle subassembly in a predetermined position relative to the deck, and the simultaneous height-adjust system utilising the boss central bore and its outer annular surface to mount an axle subassembly. This reduces the costs that would otherwise be expended in providing multiple decks for several different types of height-adjust systems.

A further feature includes a height-adjust system for individually adjusting the heights of the vegetation cutter or lawn mower wheels which includes an axle subassembly having a cluster of fingers arranged in a predetermined array which are selectively engageable in mating recesses formed in the boss. These fingers are formed on a lock element of the axle subassembly, which prevents the axle from rotating from its position relative to the deck. The axle subassembly includes an axle element which is offset from the axis of the boss bore, so that rotation of the axle element will change the height of the lawn mower deck relative to the ground. The axle subassembly is realisably connected to the deck boss by a nut and bolt, so that to change the height of the wheel relative to the deck, the operator simply unscrews the nut from the bolt, removes the axle subassembly from the boss, and reinserts the lock element fingers in a second position relative to the deck. This step is followed by reconnecting the bolt and nut.

Yet another preferred feature provides an individual height-adjust subassembly which requires no disassembly to change the height. With a single rotation of a cam, the operator withdraws the teeth of a lock member from the boss, and a compression spring automatically reinserts the fingers into the recesses in a new position when the axle subassembly has been rotated a sufficient angular distance.

The present invention therefore provides a lawn mower height-adjust system comprising, a deck having a plurality of recesses formed in a predetermined array thereon having a vegetation cutter (such as a blade or length of line) operatively associated with the deck and a driver (such as a motor or engine) drivingly connected to the vegetation cutter. At least one axle subassembly is connected to the deck adjacent a predetermined array of recesses and supports the deck in a first predetermined height above the ground. The axle subassembly includes an axle element and a lock element, the lock element defining a plurality of fingers removably engageable in said plurality of recesses in a first position to maintain the deck in the first predetermined height above the ground. The lock element is selectively movable to a second position so that the fingers engage a plurality of recesses and thereby locate the deck in a second predetermined height above the ground. Finally, there is provided means for fastening the axle subassembly to the deck.

In another embodiment of an individual height-adjust system, the lock element is selectively axially movable relative to the axle element such that the lock element fingers may be withdrawn from or inserted in the boss recesses, but the lock element nevertheless remains coupled to the axle element. The system also includes means for normally biasing the lock element fingers into engagement with the boss recesses and further includes operator-actuatable means for withdrawing the lock element fingers at least partially from the recesses against the urging of means for normally biasing the lock element. The operator-actuatable means includes a cam sandwiched between and coaxial with the axle and lock elements. The cam is connected to the axle element for rotation relative thereto and includes a first cam face co-operable with a second cam face formed on the lock element, such that rotation of the cam by the operator at least partially withdraws the fingers from the recesses. This height-adjust system further includes means operatively associated with the fingers and the boss for withdrawing the fingers totally from the recesses. The axle element, cam and lock element are rotatable in unison about the boss during at least a portion of the rotation of the cam, whereby the lock element and the axle element may be rotated from a first position to a second position, thereby changing the height of the deck relative to the ground.

Two embodiments of vegetation cutters according to the invention will now be further described with reference to the accompanying drawings in which:
FIG.1 is a left front perspective view of a ground-supported vegetation cutter or lawn mower incorporating one embodiment of the height-adjust systems of the present invention;
FIG. 2 is a left side elevational view of the deck of the lawn mower shown in FIG. 1 with the motor shroud removed;
FIG. 3 is an exploded perspective cut away view, partially in section, of the first height-adjust embodiment of the present invention;
FIG. 4 is a front elevational detail view of a first axle element shown in FIG. 3;
FIG. 5 is a left side sectional elevational view, taken along line 5-5 of FIG.4;
FIG. 6 is an elevational detail schematic view of the axle subassembly and wheel of the first height-adjust embodiment of the present invention, with the lawn mower deck shown in a lowered position;
FIG. 7 is an elevational sectional schematic view taken along the line 7-7 of FIG. 6;
FIG. 8 is an elevational sectional schematic view of the first height-adjust axle subassembly and wheel shown in FIG. 7, shown removed from the wheel boss of the deck;
FIG. 9 is an elevational detail schematic view of the height-adjust system shown in FIG. 6, after the first axle subassembly has been rotated 90° to raise the deck to a higher position relative to the ground;
FIG. 10 is an elevational sectional schematic view taken along the line 10-10 of FIG. 9;
FIG. 11 is a perspective view, partially cut away, of a second embodiment of the height-adjust systems of the present invention;
FIG. 12 is an exploded perspective view with elements partially cut away of the second height-adjust embodiment of the present invention;
FIG. 13 is a section taken along the line 13-13 of FIG. 11, showing a second axle subassembly in a locked position on a boss formed on the deck, with the deck at a first height on relative to a wheel and therefore relative to the ground;
FIG. 14 is the same as FIG.13, but showing a cam after having been rotated relative to a second axle element, until being stopped by a surface on the second axle element, and after having moved a lock element axially outwardly from the axle element such that fingers on the lock element are almost totally withdrawn from mating recesses in the boss;
FIG. 15 is the same as FIG. 14, with the cam having been rotated an additional distance, but this time having carried the lock element and the second axle element with it so that the lock element fingers are now totally withdrawn from mating recesses in the boss and are now riding upon the outside surfaces of the axial walls separating the cavities in the boss;
FIG. 15A is an enlarged perspective schematic detail view of one of the fingers FIG. 15 riding on the outside surface of a boss axial wall;
FIG. 16 is the same as FIG. 15 except that the cam has now been rotated an angular distance sufficient to allow the lock element fingers to clear the walls and to drop into place in the boss cavities under the urging of a spring, such that the deck is now locked in a second elevation relative to the wheel;
FIG. 17 is a front elevational detail view of the lock element shown in FIG. 12;
FIG. 18 is a side elevational detail view of the lock element of FIG. 17;
FIG. 19 is a rear elevational detail view of the lock element of FIG 17;
FIG. 20 is a side elevational detail view of the lock element of FIG. 17, taken from line 20-20 FIG. 19;
FIG. 21 is a sectional detail view taken along the line 21-21 of FIG. 19;
FIG. 22 is another sectional detail view, this time taken along the line 22-22 of FIG. 19;
FIG. 23 is a schematic representation of the development of the cam profile of the lock element of FIG. 17;
FIG. 24 is a front elevational detail view of the cam of FIG. 12;
FIG. 24A is a rear elevational detail view of the cam of FIG. 12;
FIG. 25 is a side elevational sectional view taken along the line 25-25 of FIG. 24 and
FIG. 26 is a sectional detail view taken along the line 26-26 of FIG. 24.

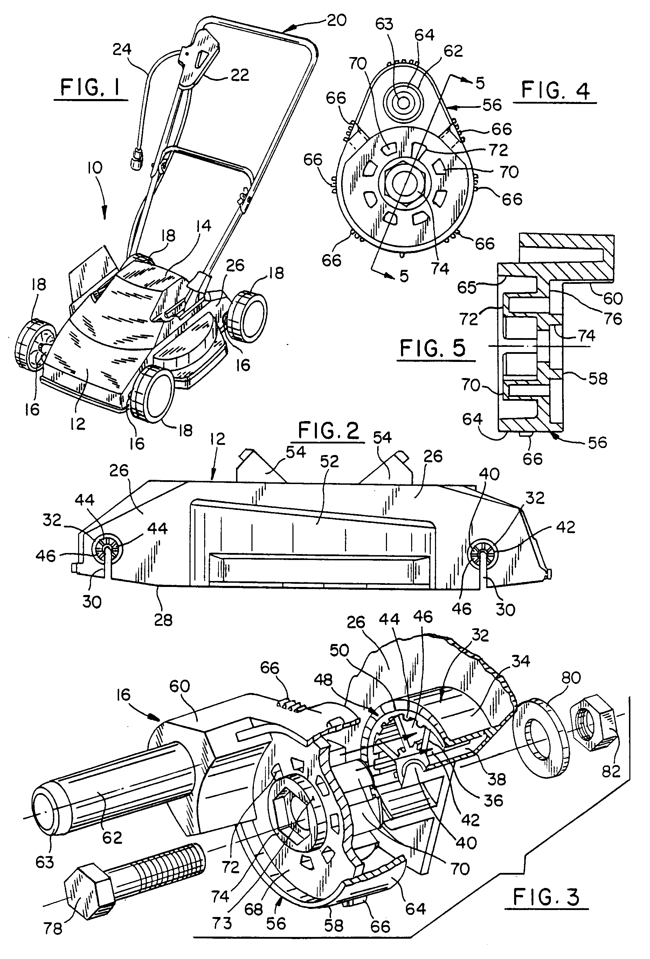

All of the embodiments of the height-adjust systems of the present invention are usable with lawn mowers powered by any means, whether by electric motor, gasoline engine or hand-power. FIG. 1 shows a lawn mower employing the first embodiment of the height-adjust systems of the present invention, the lawn mower being designated generally as 10. The lawn mower 10 includes a deck 12 made from any suitable material, such as metal or plastic. The deck 12 of the lawn mower 10 is preferably a unitary structure made of polypropylene. A driver such as an electric motor (not shown) is covered by a shroud 14. The mower is supported on the ground through first axle subassemblies 16 and wheels 18. The operator guides the mower with a push handle 20 on which is mounted a power switch 22 connected to the motor (not shown) and to a power cord 24. When power is supplied to the motor, it rotates a vegetation-cutter, such as a blade or length of line (not shown) which cuts vegetation, to a first height above the ground. The vegetation cutter is operatively associated with the deck 12 such that adjustment of the deck height will adjust the height of cut. Referring now to FIGS. 1 and 2, the unitary deck 12 includes a side wall 26 having a bottom edge 28 and defining four axle slots 30. The axle slots 30 intersect respective bosses 32 for supporting the first axle subassemblies 16 and are formed at four locations on the deck wall 26. As seen in FIGS. 2 and 3, each boss 32 is defined by an outer annular circumferential wall 34 connected by evenly-spaced axial radial walls 36 to an inner annular circumferential wall 38, which defines a boss bore 40. The outer annular circumferential wall 34, the axial radial walls 36 and the inner annular circumferential wall 38 define a plurality of trapezoid-shaped large recesses 42, and, in combination with ridges 44 formed on the inner and outer annular circumferential walls, define at least one small recess 46, in a predetermined array. In the first embodiment of the present invention, the bosses 32 define clusters of five large recesses 42 and three small ones 46. As will be described shortly, by forming on an axle subassembly a locking element, a coacting cluster of seven small fingers and one large finger, all having trapezoidal cross sections matching the small and large boss trapezoidal recesses 46, 42, respectively, it is possible to limit the number of circumferential positions of the axle and therefore the number of variations in height to a total of five. It can be appreciated that the number of available height-adjust positions can be increased or decreased by changing the numbers of large and small recesses 42, 46. The boss outer and inner circumferential walls 34, 38, also define a boss front face 48. Formed on the front face 48 adjacent the outer annular circumferential wall 34 is an annular raised portion or rail 50 which provides a bearing surface upon which rotates the first axle subassembly 16. The unitary deck 12 also defines an involute 52 and handle support towers 54.

Referring now to FIGS. 3, 4 and 5, the axle subassembly 16 includes a first axle member 56, which in the preferred embodiment is a unitary member having a lock element or base portion 58 slidably and rotatably engageable with the deck bosses 32, a pedestal 60 and an axle portion 62 having an outer annular end 63. The base portion 58 is defined by an annular outer wall 64 which in turn defines an annular inner surface 65 which slidably and rotatably engages boss axial outer wall 34. Position indicia 66 are formed on the axle base outer wall 64 as are illustrated in FIGS. 3 and 4, in which groups of small ribs 66 are formed about the outer periphery of the axle base portion outer wall 64. The quantity of ribs 66 in a particular group corresponds to a predetermined relative height of the deck above the ground. Accordingly, the position indicia 66 provide tactile and visual signals to the operator so that each axle subassembly 16 can be aligned easily relative to the others. Note that the location of the position indicia 66 upon the axle base portion outer wall 64 enables the operator to clearly observe the position indicia without their view being blocked by a wheel 18, and without having to go through several body contortions to guess the respective height positions of the wheels.

This first embodiment of the height-adjust systems of the present invention also includes a feature which limits the range of discrete heights to which the first axle subassembly 16 may be adjusted. With reference particular to FIGS. 2 and 3, and as was briefly noted above, the deck boss 32 defines five large recesses 42 and three small recesses 46, each having a generally trapezoidal cross section. Referring to FIG. 3, a front face 68 is formed on the axle base portion 58. Extending axially inwardly from the front face 68 toward the boss 32 are formed eight hollow fingers (seven small fingers 70 and one large finger 72). the fingers 70, 72 also define respective generally trapezoidal cross sections and are slidably engageable with the mating boss recesses 42, 46, as follows: the seven small fingers 70 will fit easily into the boss small recesses 46, and into large recesses 42. However, the single large finger 72 will only fit large recesses 42. This arrangement will prevent the first axle element 56 from being connected to the deck boss 32 in three of the eight available positions. In FIG. 3, the first axle member 56 is shown with its large finger 72 aligned with a small recess 46. This means that the operator will have to rotate the first axle element 56 until the large finger 72 becomes aligned with one of the large boss recesses 42. This feature also enables an operator to adjust the axle position by "feel".

A raised portion 73 is formed on the axle base front face 68 and extends axially outwardly of the front face in the opposite direction to fingers 70, 72, and defines a hexagonal fastener keeper 74. Referring now to FIG. 5, the axle base portion 58 also includes an inner face 76 which rides on the raised portion or rail 50 formed on each of the four deck bosses 32. The first axle member 56 is retained in position on the deck boss 32 by a hex bolt 78, washer 80 and nut 82.

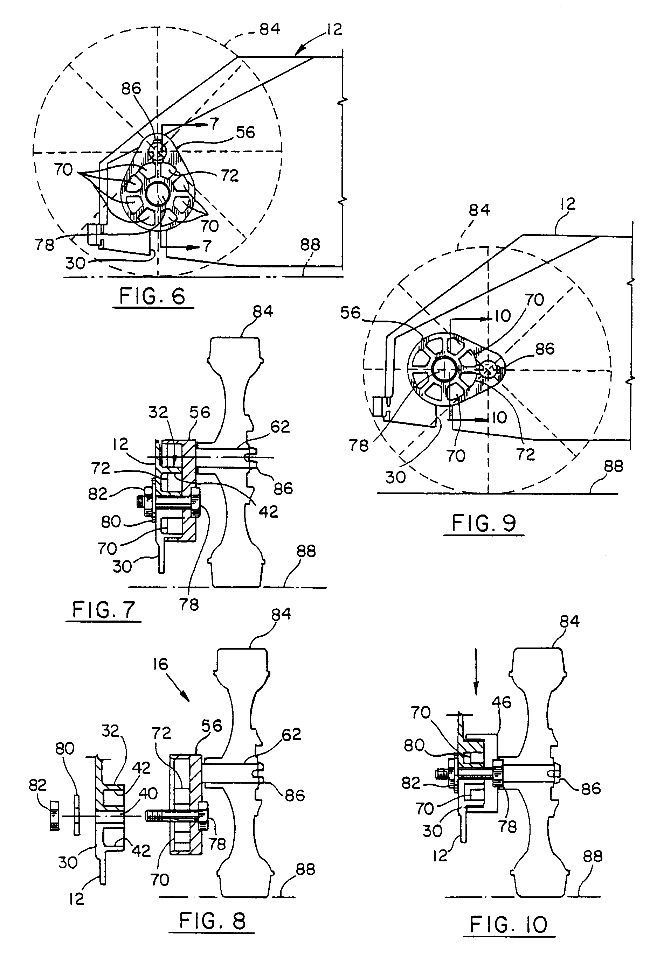

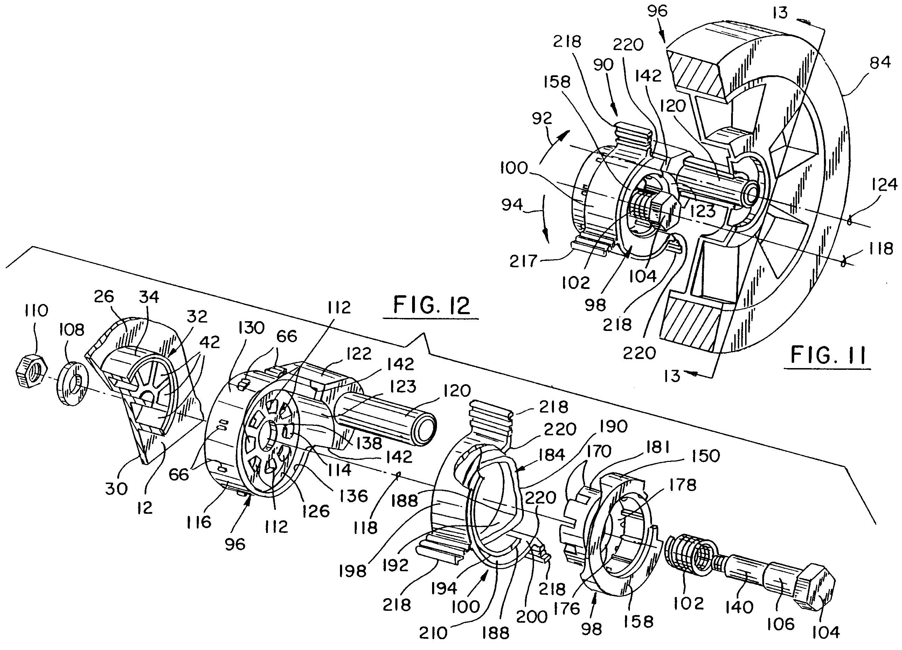

Referring now to the sequential schematic views, FIGS. 6-10, a wheel 84 is slidably and rotatably mounted on axle portion 62 of the first axle element 56. The wheel is held in place by a suitable fastener, such as one having a barbed detent end as is shown at 86. To change the height of the deck 12 from a low position shown in FIGS. 6, 7 and 8 to a high position shown in FIGS. 9 and 10, the operator removes the washer 80 and the nut 82 and withdraws the first axle member 56 until the fingers 70, 72 have been withdrawn from their respective recesses 46, 42, and until the bolt 78 has been withdrawn from the boss bore 40. Note that in the position shown in FIGS. 6, 7 and 8, both the large finger 72 and the small finger 70 engage large recesses 42.

To raise the lawn mower deck, the operator rotates the first axle member 56 until it reaches the position shown in FIGS. 9 and 10. The axle fingers 70, 72 are reinserted into the mating recesses 44, 42, the bolt is reinserted into the bore 40 and the subassembly 16 is locked into place by reattaching washer and nut 80, 82. As shown in FIGS. 9 and 10, the rotation of the offset first axle member 56 relative to the boss 32 has raised the deck relative to the wheel 84 and to the ground 88.

At this point it can be seen that the first embodiment of the height-adjust systems of the present invention uses a minimum of parts and is easily adjustable. Even though it is of the type in which each of the four wheels' position is adjusted individually, the position indicia 66 of the present invention make it a simple matter to ensure that all four wheels 84 are at the same position relative to the deck. If desired, the first axle element 56 may be formed of more than one piece, but in the preferred embodiment, it is a unitary plastic member formed of glass-filled nylon. The coaction of the interlocking fingers 70, 72 and recesses 46, 42 distribute stresses throughout the boss 32 and deck 12. This is an effective system for mounting the wheels 84 onto a plastic deck, eliminating the need for excess ribbing and reinforcement members. However, it will be appreciated that the first embodiment of the present invention is not restricted to applications involving plastic decks or other plastic components, but may be made of metal or metal and plastic, for example.

There has also been a need for an individual wheel height-adjust system which is not disassembled to change the height, yet which nevertheless is compact and easy to operate. The one-hand height-adjust system of a second embodiment of the present invention fulfils the need, and is shown in FIGS. 11-26. Referring now to FIGS. 11 and 12, a second axle subassembly is shown generally as 90. For this embodiment of the present invention the same deck 12 is used as was used in the first embodiment. Also, the same boss 32 is used to support the second axle subassembly 90 as was used to support the first axle subassembly 16. This commonalty of decks is not necessary for the function of the present invention, but by using the same deck as a foundation for each of the two height-adjust embodiments, considerable manufacturing efficiencies can be realised. Referring to FIG. 11, the second height-adjust subassembly 90 is compact and is shown in its mid-height position. To raise the mower deck 12, the operator needs only to rotate a cam in the clockwise direction as shown by arrow 92, or to rotate it counterclockwise as shown by arrow 94 to lower the deck. As will be seen, the raising and lowering is accomplished with a single motion of one hand and does not require disassembly of the elements. With respect to FIGS. 11 and 12, the second height-adjust subassembly 90 includes a second axle element 96 slidably and rotatably mounted over the boss 32, a lock element 98 slidably and rotatably mounted on the second axle member and a user-actuated cam 100 sandwiched between the second axle member and the lock element and slidably and rotatably engageable with both. As shown in FIG. 11, the subassembly 96 is held in a normally locked, compact group by a compression spring or biaser 102, which is trapped between the head 104 of a bolt 106 and a surface on lock element 98. A washer 108 and nut 110 secure the subassembly 96 to the deck 12, while allowing sufficient free play to permit rotation of the subassembly relative to the deck 12, and of the subassembly elements relative to one another.

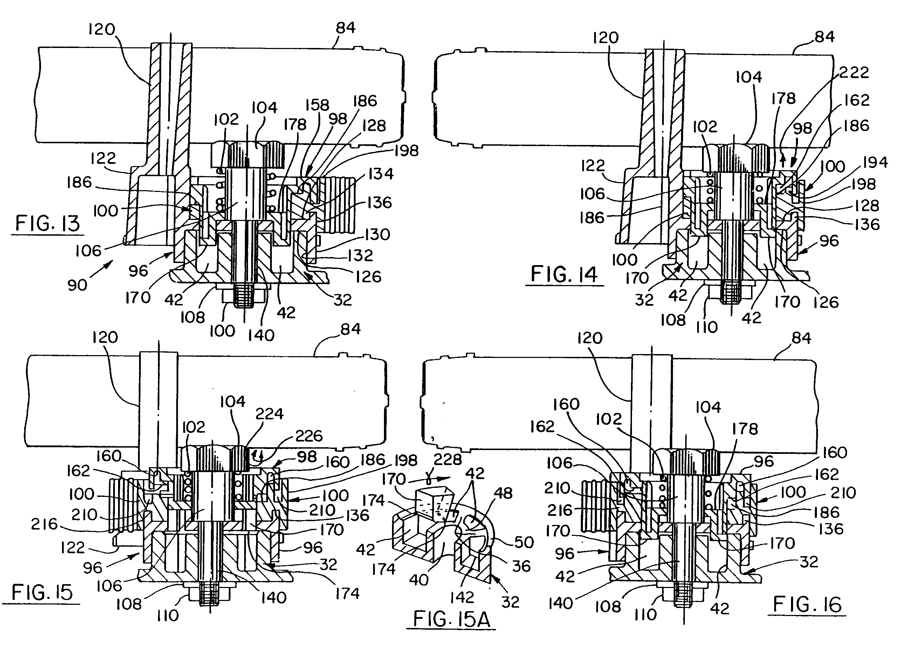

The second axle element 96 is very similar to the first axle element 56 with the main difference being that the fingers 70, 72 of the first axle element have been replaced by seven small trapezoidal through-apertures 112 and one large trapezoidal through-aperture 114. The fingers 170, 172 instead now are mounted on lock element 98, which does not rotate relative to second axle element 96, but only moves axially a distance sufficient for the fingers to clear the recesses 44, 46 formed in the boss 32. By referring to sequential FIGS. 13, 14, 15, 15-A and 16, it may be seen that by rotating cam 100, the operator will lift the lock element 98 out of its FIG. 11 position flush with respect to cam 100. The more the cam 100 is rotated, the more the lock element 98 will be axially withdrawn from the cam 100, and the more the fingers 170, 172 on the lock element will be withdrawn from the recesses 42, 44 in the boss, until ultimately the second axle element 96 is free to rotate relative to the boss, and therefore advance to the next height position selected by the operator. The step-by-step coaction of the elements of the second embodiment of the present invention will be explained in greater detail shortly.

Returning once again to details of the structure of the second axle element 96, an axle base portion 116 is rotatable about an axis 118, which is coaxial with the axes of the boss 32, lock element 98 and cam 100. An axle portion 120 is connected to the base portion 116 by a pedestal portion 122, and is coaxial with an offset axis 124 which is parallel to the axis 118. With respect to FIGS. 11 and 12, and sequential FIGS. 13-16, the second axle element base portion 116 has a front face 126, a rear face 128 and an annular external wall 130, which in turn defines first and second inner annular wall surfaces 132 and 134, respectively. The outer wall surface 130, the second inner annular wall surface 134 and the rear face 128 of the second axle element 96 in turn define an outer annular lip 136 on which is slidably and rotatably mounted cam 100, as will be described. A central annular bore 138 is sized to allow a reduced diameter portion 140 of bolt 106 to pass freely therein. Referring now to the pedestal portion 122 (FIG. 12), stop surfaces 142 are formed on both sides of the pedestal to limit the clockwise and counterclockwise rotation of the cam 100.

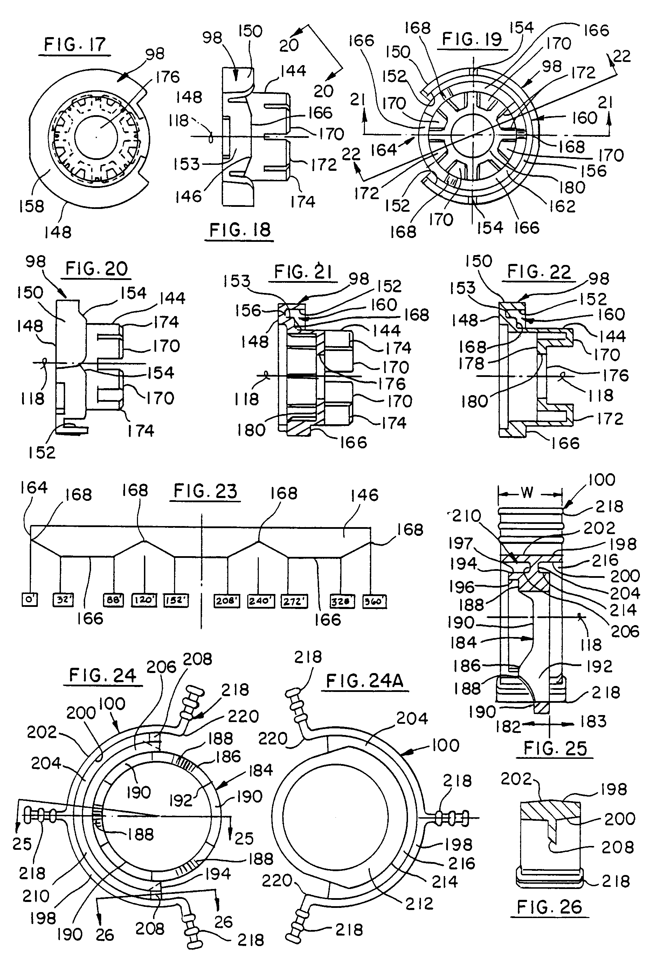

The details of lock element 98 are shown in FIGS. 12, 13-16 and 17-23. Referring to these figures, it can be seen that one of the factors contributing to the compactness and ease of assembly of the second axle subassembly is that the elements are designed to nest together in a compact stack. One way in which this is achieved is by forming the elements with respective coacting axial lips and channels. Referring now to FIG. 12 and FIGS. 17-23, the lock element 98 includes an axially-extending finger portion 144 which is surrounded by a first annular axial cam portion 146, which axially extends from a lock element base 148. The base 148 includes an outer annular wall 150 and an inner annular wall 152 (which itself is defined by an outer annular wall of the first cam portion 146). The inner annular wall 152 extends axially in two levels, forming ramps or stop portions 154, (FIGS. 19, 20) which coact with mating surfaces on the cam 100. The lock element base 148 includes an inner surface 156 and an outer surface 158. The base inner surface 156 and the outer and inner annular walls 150, 152 define a channel 160, which is adapted to permit free movement of an axially-extending wall on the cam 100. The first cam portion 146 defines a first cam face 162 which is double-sided to permit raising or lowering the height of the wheels by rotating the cam in either a clockwise or counterclockwise direction. With particular reference to FIGS. 19 and 23, the first cam face 162 includes a starting point 164 and three equally-distant sets of flat peaks 166 and relatively sharp troughs 168. FIG. 23 shows the angular dimensions of the cam profile of the preferred embodiment. The finger portion 144 includes seven small fingers 170 and one large finger 172, all have substantially trapezoidal cross-sections, as was the case with the fingers of the first embodiment of the height-adjust systems of the present invention. The tips of the fingers 170, 172 are chamfered as at 174, which, as illustrated in FIG. 15A, permit the fingers to ride up over the walls 36 separating adjacent boss recesses 44, thereby enabling the cam/lock element/second axle member subassembly to rotate in unison relative to the boss 32, as will be described. The lock element 98 further includes a bore 176 and a spring bearing surface 178 formed on a web 180 connecting the fingers 170, 172.

The last major element of the second embodiment of the present invention is the cam 100. With respect to FIG. 12 , the cam 100 is shown with its cam surface facing axially outwardly of the boss 32 and opposite to the axially inwardly-facing first cam face 162 of the lock element 98. To simplify matters, when reference is made to an "outer" or "outwardy facing" item, that means "axially outwardly with respect to the boss 32"; conversely, the words "inwardly" and "inwardly-facing" mean "axially inwardly with respect to the boss". The cam 100, as shown in FIGS. 12, 24, 24A, 25 and 26 can be best described by considering the cam to include an outward portion 182 and inward portion 183 (see FIGS. 25). The outward portion 182 includes an annular cam portion 184, which includes an outwardly facing second cam face 186 having three equally-distant relatively sharp lobes 188 and three equally distant flat lands 190, which generate the same cam profile as was generated on the first cam face 162 and as is shown in FIG. 23, such that, when the cam 100 is in the nested, locked position with respect to the lock element 98 (shown in FIG. 13) the three lobes 188 nest in and match the lock element troughs 168 and the three flat peaks 166 of the lock element nest in and match the three flat lands 190 of the cam. The annular cam portion 184 also defines a radially inwardly annular pilot surface 192 adapted for axial and rotatable sliding movement on the annular outer surface of the finger portion 144 of the lock element 98. The cam portion 184 also defines a radially outwardly-facing outer cylindrical surface 194 which is adapted for sliding axial and rotatable movement with the second axle element's radially inner surface of the base portion wall 136 and the radially inner surface 123 of the pedestal portion 122 of the second axle element 96. A radially inner annular partial wall 194 (FIG. 25) extends for approximately 185° about the cam portion 184 such that the midpoint of the inner partial wall is radially aligned with the middle cam lobe 188, as shown in FIG. 24. The outward portion 182 of the cam 100 further includes an outer surface 197 of wall 194. A radially outer wall 198 extends for an angular length of approximately 210° and is also centred at the middle lobe 188 of the cam portion 184. Wall 198 has a radially inwardly cylindrical surface 200 and a radially outer cylindrical surface 202. A web 204 connects the cam portion 184 to the outer partial wall 198. The axially outer face of web 204 defines a floor 206 having ramps 208 at each end (FIG. 24), which taper axially inwardly for engaging mating ramps 154 formed on the outer wall of the lock element 98. These serve, among other things, as stops to limit the relative rotation between the lock element 98 and the cam 100, with the cam in the centred or locked position relative to the lock element as shown in FIG. 13. When the operator rotates the cam 100, these cam ramps 208 move relative to the mating ramps 154 on the lock element and assist in moving the lock element 98 axially outwardly relative to the boss 32. The outer and inner partial walls 198, 196, respectively, together with the floor 206, form a second channel 210, so that the outer wall 150 of the lock element 98 extends axially inwardly to nest in the second channel for axial and rotary movement relative to the cam 100, and the cam inner partial wall 196 extends axially outwardly into the first channel 160 formed on the lock element, as is shown in FIGS. 13-15.

Now looking at the axially inwardly-facing portion 183 of cam 100, and with particular reference to FIGS. 24A and 25, an annular bearing surface 212 lies in a plane perpendicular to the axis 118 of the cam and is adapted to ride on the front face 126 of the base portion 116 of the second axle element 96. The annular bearing surface 212 is supported on a radially outer curved surface 216 which, together with the web 206 and the outer wall 198, creates a third channel 216 in which travels the lock element base portion outer wall 150, while the cam inner annular surface 200 is being piloted on the lock element base portion annular external wall 130. These relationships can be seen in FIGS. 13-16. In the preferred embodiment of the present invention, the respective axial dimensions of these different parts of the second height-adjust subassembly 90 are sized so that the lock member base outer surface 158 is approximately flush with the axially outer edge of the cam wall 198, as is particularly shown in FIG. 11. Three equally distant ribbed finger portions 218 are formed on the outer wall 198 to extend radially a sufficient distance to permit grasping by the fingers of an operator. One is formed at each end of the partial outer wall 198 and the third is centred radially with respect to the centre cam lobe 188. The two finger portions 218 at the ends of the outer wall 198 form junctions 220 which, when the operator rotates the cam 100, engage the respective pedestal stop surfaces 142 formed on each side of the second axle element pedestal portion 122. As was previously described, this feature limits the amount of rotation, either clockwise or counterclockwise of cam 100 relative to the second axle element 96, as shown by arrows 92, 94 in FIG. 11.

As was noted, the elements of the second embodiment of the present invention are assembled into a compact package as shown in FIG. 11 by virtue of the ways in which the respective elements nest within one another. Referring now to FIG. 12 and to FIGS. 13-16, the cam 100 is assembled to the second axle element 96 by piloting the third channel 216 over the outer axial annular lip 136 of the second axle element 96, with the two ribbed finger portions 218 placed on each side of the pedestal portion 122, and the outer surface 197 of the cam wall 194 nested against the inner curved surface 123 of pedestal portion 122. The cam 100 is free to rotate a limited distance, either clockwise or counterclockwise relative to the second axle element 96, until, as was described above, the respective junctions 220 engage respective stop surfaces 142 formed on both sides of the pedestal portion 122. The lock element 98 is then assembled to the second axle element/cam subassembly by inserting the respective lock element fingers 170, 172 in respective mating through-apertures 112, 114 in the second axle element 96. Simultaneously, the annular finger cluster and coplanar outside annular surface 181 of web 180 (FIG. 12) are piloted against the inner pilot surface of the cam portion 184, and the first channel 160 of the lock member 98 is piloted over the inner partial wall 194 of the cam, 100 while the lock element outer annular wall 150 is piloted in the cam second channel 210, against the inner surface 200 of the cam outer wall 198. The lock element 98 is pushed axially inwardly until the base outer surface 158 is flush with the axially outer-most edge of the cam outer wall 198, as shown in FIG.11 and FIG. 13. As shown in FIGS. 11 and 13, the three-element subassembly is in its locked position. The biaser or compression spring 102 is then inserted into the lock element 98 and the bolt 106 is inserted into the spring and the three-element subassembly. The subassembly is then connected to the boss by piloting the first inner annular wall surface 132 of the second axle base portion 116 over the boss outer circumferential wall 234, such that the lock element fingers 170, 172 engage mating recesses 42, 46 in the boss 32, and the bolt reduced portion 140 enters the boss bore 40. The washer 108 and nut 110 are then assembled to the bolt until the subassembly is snugly attached to the deck 12.

The sequence of operation of the second embodiment of the height-adjust system of the present invention may be seen by looking at FIGS. 13-16. In FIG. 13, the second height-adjust subassembly 90 is shown in a locked position relative to the boss 32, such that the axle portion 120 and wheel 84 are at a predetermined position or height relative to the deck 12. Throughout the following description it will be helpful to recall that the only element which moves axially relative to the boss or to the other elements in the height-adjust system is the lock element 98. However, by virtue of the interengagement of the lock element fingers 170, 172 with the mating through-apertures 112, 114 in the second axle element 96, the lock element 98 is prevented from rotating relative to the second axle element, and is forced to rotate in unison with the second axle element.

If the operator wishes to change the height of the deck above the ground, the operator grasps two of the ribbed finger portions 218 and simply rotates the cam 100. If the cam is rotated clockwise (as see from the position of an operator looking from the wheel 84 inwardly to the boss 32) and as seen in FIG. 14, the coaction of the respective cam faces 186 (cam) and 162 (locking element) forces the locking element axially outwardly as shown by arrow 222. This will withdraw fingers 170, 172 almost completely out of respective recesses 42, 46 in the boss 32. As yet, there has been no relative rotational motion between the second axle element 96, the lock element 98, and the boss 32. This is the first step of the adjustment process.

Referring now to FIGS. 15 and 15A, as the operator continues to rotates the cam 100 clockwise, the fingers 170, 172 will ride up over the adjacent axial radial walls 36 of the boss 32, by virtue of the coaction of the finger chamfer portions 174 with the wall 36. This additional rotation will withdraw the fingers 170, 172 entirely from the deck boss 32, and is the second step of the height-adjustment process. Note that the lock element 98 is now moving both axially and rotationally as indicated by arrows 224 and 226, respectively in FIG. 15. Referring now to FIG. 15A, the third step of the height-adjustment process includes the step of continuing the counterclockwise rotation of the cam 100 so that a finger 170 rotates to a position adjacent the beginning of the next recess 42, as indicated by arrow 228. As the operator continues to rotate the lock element 98, the compression spring 102 then drives the fingers over respective axial radial walls 36 of the boss 32 with an audible "click", which is also felt by the operator. This condition is illustrated in FIG. 16, in which the lock element 98 has moved both rotationally and axially, this time inwardly. That completes the fourth step of the process. The fifth and last step is completed by the action of the spring 102 which automatically thrusts the locking element all the way back into a locked position, similar to that shown in FIG. 13. In practice, the operator changes the height of the wheel with a single, quick rotational force on cam 100, allowing the spring 102 to do the work of completing the fourth and fifth stages of the process.

As shown in FIG. 12, the second embodiment of the height-adjust systems of the present invention includes the position indicia 66 of the first embodiment, but additionally enables the operator to adjust the height of the respective wheels easily, with one hand, and without having to disassemble any of the components. Also, by virtue of the nesting interengagement of the elements of the second axle subassembly 90, it will be appreciated that the system components can be assembled quickly. Although the respective elements of the second height-adjust subassembly are made of A.B.S. plastic, it will be appreciated that any suitable material can be used. Also, although the respective elements have been described as unitary structures, it can be appreciated that the word "element" will also include units which are multi-piece assemblies. For example, the second axle element may be formed in three separate pieces - the second axle base portion 116 being one piece the axle portion 120 being another piece and the pedestal portion 122 being a third piece.

The above-described embodiments, of course, are not to be construed as limiting the breadth of the present invention. Modifications, and other alternative constructions, will be apparent which are within the scope of the invention as defined in the appended claims.

## Claims

1. A ground-supported vegetation cutter comprising;
(a) a deck (12) having a plurality of recesses (42, 46) formed in a predetermined array thereon;
(b) a vegetation cutter operatively associated with said deck;
(c) a driver drivingly connected to said vegetation cutter;
(d) at least one axle subassembly (16) connected to said deck (12) adjacent said predetermined array and supporting said deck (12) in a first predetermined height above the ground;
(e) said at least one axle subassembly (16) including an axle element (56,96) and a lock element (58,98); and
(f) means for fastening said axle subassembly (16) to said deck (12), characterised in that
(g) said lock element (58,98) defines a plurality of fingers (70,72,170,172) removably engageable in said plurality of recesses (42,46) in a first position maintaining said deck (12) in said first predetermined height above the ground; and
(h) said lock element (58,98) is selectively moveable to a second position so that said fingers (70,72,170,172) again engage said plurality of recesses (42,46) thereby locating said deck (12) in a second predetermined height above the ground.

2. A ground-supported vegetation cutter according to claim 1, characterised in that
(a) a boss (32) is formed on said deck (12), defining said predetermined array of recesses (42, 46); and
(b) said axle element (56) is slidably and rotatably mounted on said boss (32) and includes an axle portion (62) supporting a wheel (84).

3. A ground-supported vegetation cutter according to claim 2, characterised in that
(a) said boss (32) is an annular structure extending axially outwardly from a side portion of said deck (12) and defines an annular array of recesses (42, 46) formed about a first axis;
(b) said lock element (58) defines an annular array of fingers (70, 72);
(c) said axle portion (62) includes a portion extending along a second axis offset from and parallel to said first axis, whereby rotation of said axle portion (62) on said boss (32) changes the height of said deck (12) above the ground; and
(d) said axle element (56) and said lock element (58) form a unitary structure.

4. A ground-supported vegetation cutter according to claim 3, characterised in that the annular array of fingers (70,72) formed on said lock element (58) are operatively associated with said boss (32).

5. A ground-supported vegetation cutter according to claim 4, characterised in that position indicia (66) are formed on said axle subassembly (56) for indicating the position of said axle portion (62) relative to said deck (12).

6. A ground-supported vegetation cutter according to claim 3, characterised in that four axle subassemblies (56) are connected to said deck (12), and each of said axle sub-assemblies (56) includes an axle element (56) and a lock element (58).

7. A ground-supported vegetation cutter according to claim 1, characterised in that said lock element (98) is selectively axially moveable relative to said axle element (96) such that said fingers (170,172) may be withdrawn from or inserted in said recesses (42,46).

8. A ground-supported vegetation cutter according to claim 7, characterised in that:
(a) an annular boss (32) extends axially from a side of said deck (12) and defines an annular array of recesses (42,46) formed about a first axis;
(b) said lock element (98) defines an annular array of fingers (170, 172) formed about a second axis; and
(c) said lock element (98) is mounted on said axle element (96) and coaxial therewith such that said axle element (96) is prevented from rotation relative to said deck (12) unless said fingers (170,172) have been at least partially withdrawn from said recesses (42,46).

9. A ground-supported vegetation cutter according to claim 8, characterised in that it comprises:
(a) means for normally biasing said lock element fingers (170,172) into engagement with said boss recesses (42,46); and
(b) operator-actuatable means for withdrawing said lock element fingers (170, 172) at least partially out of said recesses (42,46) against the urging of said means for normally biasing said lock element (98).

10. A ground-supported vegetation cutter according to claim 9, characterised in that it comprises:
(a) said operator-actuatable means including a cam (100) sandwiched between, and coaxial with, said axle (96) and lock elements (98);
(b) said cam (100) being connected to said axle element (98) for rotation relative thereto; and
(c) said cam (100) including a first cam face cooperable with a second cam face formed on said lock element (98) such that rotation of said cam (100) by said operator at least partially withdraws said fingers from said recesses.

11. A ground-supported vegetation cutter according to claim 10, characterised in that;
(a) said axle element (96) includes an axle portion (62) for mounting a wheel (84) and a base portion rotatably mounted on, and coaxial with, said boss (32);
(b) said base portion defining a plurality of through-holes arranged in the same array as are arranged in the boss recesses (42,46); and
(c) said cam (100) being adapted to move said lock element fingers (170,172) axially in said axle element through apertures during the withdrawal or insertion of said fingers (170,172), respectively, from or into said recesses (42,46).

12. A ground-supported vegetation cutter according to claim 11, characterised in that it further comprises:
(a) means operatively associated with said fingers (170,172) and said boss (32) for withdrawing said fingers totally from said recesses (42,46).
(b) said axle element (96), cam (100) and lock element (98) being rotatable in unison about said boss (32) during at least a portion of the rotation of said cam (100);
(c) whereby said lock element (98) and said axle element (96) may be rotated from said first position to said second position.

## Patentansprüche

1. Auf dem Boden gehaltene Grasschneidevorrichtung mit:
(a) einer Tragkonstruktion (12), bei der in einem bestimmten Bereich eine Anzahl von Vertiefungen (42, 46) ausgebildet ist;
(b) einer Grasschneideeinrichtung, die funktional mit der Tragkonstruktion verbunden ist;
(c) einem Antrieb, der antreibend mit der Grasschneideeinrichtung gekoppelt ist;
(d) zumindest einer Achsen-Unteranordnung (16), die nahe des bestimmten Bereiches mit der Tragkonstruktion (12) verbunden ist und die Tragkonstruktion (12) in einer ersten bestimmten Höhe über dem Boden hält;
(e) wobei diese zumindest eine Achsen-Unteranordnung (16) ein Achsen-Element (56, 96) und ein Feststell-Element (58, 98) aufweist; und
(f) Einrichtungen, um die Achsen-Unteranordnung (16) an der Tragkonstruktion (12) zu befestigen, **dadurch gekennzeichnet**, daß
(g) am Feststell-Element (58, 98) eine Anzahl von Greifern (70, 72, 170, 172) ausgebildet ist, die mit der Anzahl von Vertiefungen (42, 46) in einer ersten Stellung lösbar eingreifen können, bei der die Tragkonstruktion (12) in einer ersten bestimmten Höhe über dem Boden gehalten ist; und
(h) das Feststell-Element (58, 98) wahlweise in eine zweite Stellung bewegt werden kann, so daß die Greifer (70, 72, 170, 172) wieder mit der Anzahl von Vertiefungen (42, 46) eingreifen, bei der die Tragkonstruktion (12) in einer zweiten bestimmten Höhe über dem Boden gehalten ist.

2. Auf dem Boden gehaltene Grasschneidevorrichtung nach Anspruch 1, **dadurch gekennzeichnet**, daß
(a) an der Tragkonstruktion (12) ein Vorsprung (32) gebildet ist, der den bestimmten Bereich von Vertiefungen (42, 46) bestimmt; und
(b) das Achsen-Element (56) verschiebbar und verdrehbar am Vorsprung (32) gehalten ist und einen Achsen-Bereich (62) aufweist, an dem ein Rad (84) montiert ist.

3. Auf dem Boden gehaltene Grasschneidevorrichtung nach Anspruch 2, **dadurch gekennzeichnet**, daß
(a) der Vorsprung (32), der eine ringförmige Bauweise hat, sich von einem Seitenbereich der Tragkonstruktion (12) in axialer Richtung nach außen erstreckt und einen ringförmigen Bereich von Vertiefungen (42, 46) bestimmt, die um eine erste Achse herum ausgebildet sind;
(b) das Feststell-Element (58) eine ringförmige Gruppe von Greifern (70, 72) bestimmt;
(c) der Achsen-Bereich (62) einen Bereich enthält, der sich entlang einer zweiten Achse erstreckt, die zur ersten Achse versetzt und parallel verläuft, wodurch bei einer Drehung des Achsen-Bereiches (62) auf dem Vorsprung (32) die Höhe der Tragkonstruktion (12) über dem Boden verändert wird; und
(d) das Achsen-Element (56) und das Feststell-Element (58) eine einteilige Anordnung bilden.

4. Auf dem Boden gehaltene Grasschneidevorrichtung nach Anspruch 3, **dadurch gekennzeichnet**, daß die ringförmige Gruppe von Greifern (70, 72), die am Feststell-Element (58) ausgebildet sind, funktional mit dem Vorsprung (32) in Beziehung stehen.

5. Auf dem Boden gehaltene Grasschneidevorrichtung nach Anspruch 4, **dadurch gekennzeichnet**, daß auf der Achsen-Unteranordnung (16) Positionsmarkierungen (66) ausgebildet sind, um die Stellung des Achsen-Bereiches (62) bezüglich der Tragkonstruktion (12) anzuzeigen.

6. Auf dem Boden gehaltene Grasschneidevorrichtung nach Anspruch 3, **dadurch gekennzeichnet**, daß vier Achsen-Unteranordnungen (16) an der Tragkonstruktion (12) montiert sind und daß jede der Achsen-Unteranordnungen (16) ein Achsen-Element (56) und ein Feststell-Element (58) aufweist.

7. Auf dem Boden gehaltene Grasschneidevorrichtung nach Anspruch 1, **dadurch gekennzeichnet**, daß das Feststell-Element (98) bezüglich des Achsen-Elementes (96) wahlweise in axialer Richtung bewegbar ist, so daß die Greifer (170, 172) aus den Vertiefungen (42, 46) herausgezogen oder darin eingesetzt werden können.

8. Auf dem Boden gehaltene Grasschneidevorrichtung nach Anspruch 7, **dadurch gekennzeichnet**, daß:
(a) sich ein ringförmiger Vorsprung (32) von einer Seite der Tragkonstruktion (12) in axialer Richtung erstreckt und einen ringförmigen Bereich von Vertiefungen (42, 46) bestimmt, die um eine erste Achse herum ausgebildet sind;
(b) das Feststell-Element (98) eine ringförmige Gruppe von Greifern (170, 172) bestimmt, die um eine zweite Achse herum ausgebildet sind; und
(c) das Feststell-Element (98) an dem Achsen-Element (96) angebracht ist und koaxial zu diesem verläuft, so daß sich das Achsen-Element (96) bezüglich der Tragkonstruktion (12) nicht drehen läßt, bis die Greifer (170, 172) zumindest teilweise aus den Vertiefungen (42, 46) herausgezogen sind.

9. Auf dem Boden gehaltene Grasschneidevorrichtung nach Anspruch 8, **dadurch gekennzeichnet**, daß diese aufweist:
(a) Einrichtungen, um die Greifer (170, 172) des Feststell-Elementes in Richtung auf den Eingriff mit den Vertiefungen (42, 46) im Vorsprung vorzuspannen; und
(b) vom Benutzer zu betätigende Einrichtungen, um die Greifer (170, 172) des Feststell-Elementes gegen die Kraft der Einrichtungen zum Vorspannen des Feststell-Elementes (98) zumindest teilweise aus den Vertiefungen (42, 46) herauszuziehen.

10. Auf dem Boden gehaltene Grasschneidevorrichtung nach Anspruch 9, **dadurch gekennzeichnet**, daß diese aufweist:
(a) durch den Benutzer zu betätigende Einrichtungen, die einen Nocken (100) umfassen, der koaxial zwischen dem Achsen-Element (96) und den Feststell-Element (98) angeordnet ist;
(b) wobei der Nocken (100) mit dem Achsen-Element (96) gekoppelt ist, um relativ zu diesem gedreht werden zu können; und
(c) wobei der Nocken (100) eine erste Nockenfläche aufweist, die mit einer zweiten Nockenfläche zusammenwirkt, die auf dem Feststell-Element (98) gebildet ist, so daß bei Drehung des Nockens (100) durch den Benutzer die Greifer zumindest teilweise aus den Vertiefungen herausgezogen werden.

11. Auf dem Boden gehaltene Grasschneidevorrichtung nach Anspruch 10, **dadurch gekennzeichnet**, daß:
(a) das Achsen-Element (96) einen Achsen-Bereich (62) zum Anbringen eines Rades (84) und einen Basisbereich hat, der drehbar am Vorsprung (32) montiert ist und zu diesem koaxial verläuft;
(b) der Basisbereich eine Anzahl von Durchgangsöffnungen bestimmt, die im gleichen Bereich angeordnet sind, in dem die Vertiefungen (42, 46) im Vorsprung angeordnet sind; und
(c) der Nocken (100) dazu ausgestaltet ist, um die Greifer (170, 172) des Feststell-Elementes in axialer Richtung durch die Durchgangsöffnungen des Achsen-Elementes zu bewegen, wodurch die Greifer (170, 172) aus den Vertiefungen (42, 46) herausgezogen bzw. darin hineingeschoben werden.

12. Auf dem Boden gehaltene Grasschneidevorrichtung nach Anspruch 11, **dadurch gekennzeichnet**, daß dieser weiterhin aufweist:
(a) Einrichtungen, die funktional mit den Greifern (170, 172) und dem Vorsprung (32) in Beziehung stehen, um die Greifer vollständig aus den Vertiefungen (42, 46) herauszuziehen;
(b) wobei das Achsen-Element (96), der Nocken (100) und das Feststell-Element (98) während zumindest eines Teils der Drehung des Nockens (100) gemeinsam um den Vorsprung (32) herum gedreht werden können;
(c) wodurch das Feststell-Element (98) und das Achsen-Element (96) von der ersten Stellung in die zweite Stellung gedreht werden können.

## Revendications

1. Dispositif de coupe de végétation posé au sol comprenant ;
(a) un capot (12) ayant un ensemble de logements (42, 46) formés en une rangée prédéterminée sur celui-ci,
(b) un dispositif de coupe de végétation associé de façon active avec ledit capot ;
(c) un dispositif d'entraînement raccordé, pour l'entraîner, audit dispositif de coupe de végétation ;
(d) au moins un sous-ensemble d'axe (16) raccordé audit capot (12) adjacent à ladite rangée prédéterminée de logements et supportant ledit capot (12) à une première hauteur prédéterminée au-dessus du sol ;
(e) lesdits au moins un sous-ensembles d'axe (16) comprenant un élément d'axe (56, 96) et un élément de verrouillage (58, 98), et
(f) des moyens pour fixer ledit sous-ensemble d'axe (16) sur ledit capot (12), caractérisé en ce que
(g) ledit élément de verrouillage (58, 98) définit un ensemble de doigts (70, 72, 170, 172) pouvant venir en prise de façon amovible dans ledit ensemble de logements (42, 46) dans une première position maintenant ledit capot (12) à ladite première hauteur prédéterminée au-dessus du sol ; et
(h) ledit élément de verrouillage (58, 98) peut être déplacé de façon sélective vers une seconde position de sorte que lesdits doigts (70, 72, 170, 172) viennent en prise à nouveau avec ledit ensemble de logements (42, 46) plaçant, par ce moyen, ledit capot (12) à une seconde hauteur prédéterminée au-dessus du sol.

2. Dispositif de coupe de végétation posé au sol selon la revendication 1, caractérisé en ce que
(a) un bossage (32) est formé sur ledit capot (12), définissant ladite rangée de logements prédéterminée (42, 46) ; et
(b) ledit élément d'axe (56) est monté de façon coulissante et tournante sur ledit bossage (32) et comprend une partie axe (62) supportant une roue (84).

3. Dispositif de coupe de végétation posé au sol selon la revendication 2, caractérisé en ce que
(a) ledit bossage (32) est une structure annulaire s'étendant axialement vers l'extérieur depuis une partie latérale dudit capot (12) et définit une rangée annulaire de logements (42, 46) formée autour d'un premier axe ;
(b) ledit élément de verrouillage (58) définit une rangée annulaire de doigts (70, 72) ;
(c) ladite partie axe (62) comprend une partie s'étendant le long d'un second axe décalé par rapport audit premier axe et parallèle à celui-ci, ce par quoi la rotation deladite partie axe (62) sur ledit bossage (32) change la hauteur dudit capot (12) au-dessus du sol ; et
(d) ledit élément d'axe (56) et ledit élément de verrouillage (58) forment une structure unitaire.

4. Dispositif de coupe de végétation posé au sol selon la revendication 3, caractérisé en ce que la rangée annulaire de doigts (70, 72) formée sur ledit élément de verrouillage (58) est associée de façon active avec ledit bossage (32).

5. Dispositif de coupe de végétation posé au sol selon la revendication 4, caractérisé en ce que les repères de position (66) sont formés sur ledit sous-ensemble d'axe (56) pour indiquer la position deladite partie axe (62) par rapport audit capot (12).

6. Dispositif de coupe de végétation posé au sol selon la revendication 3, caractérisé en ce que quatre sous-ensembles d'axes (56) sont raccordés audit capot (12), et chacun desdits sous-ensembles d'axes (56) comprend un élément d'axe (56) et un élément de verrouillage (58).

7. Dispositif de coupe de végétation posé au sol selon la revendication 1, caractérisé en ce que ledit élément de verrouillage (98) peut être déplacé axialement de façon sélective par rapport audit élément d'axe (96) de sorte que lesdits doigts (170, 172) peuvent être retirés desdits logements (42, 46) ou insérés dans ceux-ci.

8. Dispositif de coupe de végétation posé au sol selon la revendication 7, caractérisé en ce que :
(a) un bossage annulaire (32) s'étend axialement depuis un côté dudit capot (12) et définit une rangée annulaire de logements (42, 46) formée autour d'un premier axe.
(b) ledit élément de verrouillage (98) définit une rangée annulaire de doigts (170, 172) formée autour d'un second axe ; et
(c) ledit élément de verrouillage (98) est monté sur ledit élément d'axe (96) et coaxial avec celui-ci, de sorte que ledit élément d'axe (96) est empêché de tourner par rapport audit capot (12) à moins que lesdits doigts (170, 172) ont été, au moins partiellement, retirés desdits logements (42, 46).

9. Dispositif de coupe de végétation posé au sol selon la revendication 8, caractérisé en ce qu'il comprend :
(a) des moyens pour rappeler normalement lesdits doigts d'élément de verrouillage (170, 172) en prise avec lesdits logements de bossage (42, 46) ; et
(b) des moyens pouvant être mis en oeuvre par l'utilisateur pour retirer lesdits doigts d'élément de verrouillage (170, 172) au moins partiellement hors desdits logements (42, 46) contre la poussée desdit moyens pour rappeler normalement ledit élément de verrouillage (98).

10. Dispositif de coupe de végétation posé au sol selon la revendication 9, caractérisé en ce qu'il comprend :
(a) lesdits moyens pouvant être mis en oeuvre par l'utilisateur incluant une came (100) prise en sandwich entre ledit axe (96) et l'élément de verrouillage (98), et coaxiale avec ceux-ci ;
(b) ladite came (100) étant raccordée audit élément d'axe (98) pour une rotation relative par rapport à celui-ci ; et
(c) ladite came (100) incluant une première face de came pouvant coopérer avec une seconde face de came formée sur ledit élément de verrouillage (98), de sorte que cette rotation deladite came (100) par ledit utilisateur retire, au moins partiellement, lesdits doigts desdits logements.

11. Dispositif de coupe de végétation posé au sol selon la revendication 10, caractérisé en ce que ;
(a) ledit élément d'axe (96) comprend une partie axe (62) pour monter une roue (84) et une partie de base montée mobile en rotation sur ledit bossage (32) et coaxiale avec celui-ci ;
(b) ladite partie de base définissant un ensemble de trous traversants agencés en la même rangée que sont agencés dedans les logements de bossage (42, 46) ; et
(c) ladite came (100) étant conçue pour déplacer lesdits doigts d'élément de verrouillage (170, 172) axialement dans lesdites ouvertures traversantes d'élément d'axe pendant le retrait ou l'insertion desdits doigts (170, 172), respectivement, hors ou à l'intérieur desdits logements (42, 46).

12. Dispositif de coupe de végétation posé au sol selon la revendication 11, caractérisé en ce qu'il comprend de plus :
(a) des moyens associés de façon active avec lesdits doigts (170, 172) et ledit bossage (32) pour retirer totalement lesdits doigts desdits logements (42,46).
(b) ledit élément d'axe (96), la came (100) et l'élément de verrouillage (98) étant mobiles en rotation à l'unisson autour dudit bossage (32) pendant au moins une partie de la rotation deladite came (100) ;
(c) ce par quoi ledit élément de verrouillage (98) et ledit élément d'axe (96) peuvent être tournés de ladite première position à ladite seconde position.
